# EUROPEAN PATENT APPLICATION

(11) **EP 4 484 211 A1**
(43) Date of publication of application: **01.01.2025**
(21) Application number: 24184721.9
(22) Date of filing: 26.06.2024
(51) Int. Cl.: B60L 53/30, B60L 53/31, B60L 53/66, H05K 5/02

(54) **MODULAR AND FIELD UPGRADABLE INFRASTRUCTURE DEVICE SUCH AS ELECTRIC VEHICLE SUPPLY EQUIPMENT (EVSE) FOR ELECTRIC VEHICLE (EV) CHARGING**

(30) Priority: 29.06.2023 US 202318343813
(71) Applicant: Siemens Industry, Inc., Alpharetta, GA 30005 (US)
(72) Inventor: FELDMAN, Daniel, New York, 10022 (US); HEYNE, Jean-Christoph, 90425 Nürnberg (DE); PERRAS, Stefan, 82223 Eichenau (DE)
(74) Representative: Isarpatent

(57) **Abstract**

A modular and field upgradable infrastructure device is provided for electric vehicle (EV) charging. The infrastructure device comprises a common communications and control module/a common meter/power module that can be connected to individual charging modules. It further comprises one or more AC, DC and wireless charging modules as internal or external pluggable devices. The common communications and control module is coupled to the AC, DC and wireless charging modules such that the infrastructure device communicates with an EV using power line communications via a protocol or several protocols.

## Description

### BACKGROUND

### 1. Field

Aspects of the present invention generally relate to a modular and field upgradable infrastructure device such as Electric Vehicle Supply Equipment (EVSE) for electric vehicle (EV) charging.

### 2. Description of the Related Art

Unlike gas-powered vehicles, electric vehicles (EVs) do not require internal combustion engines to operate. Outfitted with an electric motor and a rechargeable battery pack, EVs move along our roadways without burning up gasoline, or producing harmful exhaust emissions, while generating less noise pollution. The world of transportation continues to rapidly evolve. Sales of electric vehicles (EVs) are expected to expand rapidly in the US in the coming years. Economics aside, there are growing social and political initiatives toward "clean" energy that will push this to become reality. A number of market forecasts indicate electric vehicles will account for nearly 1 in 5 of all vehicles sold within the next 10 years. It is estimated approximately 3 million EVs will be sold in the US in 2028. A rule of thumb by industry analysts is there need be on the order of 20 public EVC stations per EV on the road to support the ecosystem. There were just over 60,000 charging stations in the US at the end of 2019. Thus, tens of thousands will need to be deployed every year for some time as the market grows.

Charging stations have provided hundreds of millions of charges to EV (electric vehicle) drivers worldwide. When it comes to electric vehicles, the converter is built inside the car. It's called the "onboard charger" though it really is a converter. It converts power from AC to DC and then feeds it into the car's battery. This is the most common charging method for electric vehicles today and most chargers use AC power.

An EV is connected to AC power, 120V or 240V, and a battery charger in the EV converts the AC power to the DC needed to charge the battery and controls the charging process. In DCFC the DCFC converts the AC power to DC and the DC power is sent directly to the EV battery bypassing the onboard battery charger. There are three categories or types of charging: Trickle Charge, AC Charge and DC Charge. Most drivers of electric vehicles (EVs)-which include all-electric vehicles and plug-in hybrid electric vehicles (PHEVs)-charge their vehicles overnight at home using AC Level 1 or AC Level 2 charging equipment.

A charging station, also known as a charge point or electric vehicle supply equipment (EVSE), is a piece of equipment that supplies electrical power for charging plug-in electric vehicles (including electric cars, electric trucks, electric buses, neighborhood electric vehicles, and plug-in hybrids). There are two main types: AC charging stations and DC fast chargers. Batteries can only be charged with direct current (DC) electric power, while most electricity is delivered from the power grid as alternating current (AC). For this reason, most electric vehicles have an onboard charger with an AC-to-DC converter (a rectifier). At an AC charging station, power is supplied to the onboard charger.

Upgrading of charging equipment is needed to support different standards in a single location without having to replace it. Replacing charging equipment in the field is done right now.

Therefore, there is a need for modular and field upgradeable EV charger topology.

### SUMMARY

Briefly described, aspects of the present invention relate to a modular and field upgradable infrastructure device such as Electric Vehicle Supply Equipment (EVSE) for electric vehicle (EV) charging.

Problem: charging technologies evolve with time, and it is likely that certain locations can benefit from future upgrades from pure AC charging or pure DC charging to a combination of DC, AC and Wireless. This upgradeability is currently impossible, and requires a full removal and replacement of whatever charger was installed, loosing existing investment, being a costly upgrade.

Solution: modular and field upgradeable EV charger topology, in which there is a common communications module, that can be connected to X individual charging modules. AC charging modules have a simple safety controller and the relay and adjacent circuits, including metering. DC charging modules have an AC-DC controlled by a DSP with metering at both the AC and DC sides. The Wireless Charging module includes a DC charging module. AC charging modules are connected to AC cables, DC charging modules to either one or two DC cables, and wireless charging modules are connected to the ground assembly. When multiple DC modules are in place, a matrix allows sharing power between DC blocks.

In accordance with one illustrative embodiment of the present invention, a modular and field upgradable infrastructure device is provided for electric vehicle (EV) charging. The infrastructure device comprises a common communications and control module that can be connected to individual charging modules. The infrastructure device further comprises one or more AC charging modules. The infrastructure device further comprises one or more DC charging modules. The infrastructure device further comprises one or more wireless charging modules. The common communications and control module is coupled to the one or more AC charging modules, the one or more DC charging modules and the one or more wireless charging modules such that the infrastructure device communicates with an EV using power line communications via a protocol or several protocols. The one or more AC charging modules, the one or more DC charging modules and the one or more wireless charging modules can be added or replaced or can be upgraded by a customer in a field without the need to replace a base chassis, a ground assembly and without the need to change a grid connectivity such that certain locations can benefit from future upgrades from pure AC charging or pure DC charging to a combination of DC, AC and Wireless.

In accordance with one illustrative embodiment of the present invention, a method of providing a modular and field upgradable infrastructure device for electric vehicle (EV) charging is provided. The method comprises providing a common communications and control module that can be connected to individual charging modules. The method further comprises providing one or more AC charging modules. The method further comprises providing one or more DC charging modules. The method further comprises providing one or more wireless charging modules. The common communications and control module is coupled to the one or more AC charging modules, the one or more DC charging modules and the one or more wireless charging modules such that the infrastructure device communicates with an EV using power line communications via a protocol or several protocols. The one or more AC charging modules, the one or more DC charging modules and the one or more wireless charging modules can be added or replaced or can be upgraded by a customer in a field without the need to replace a base chassis, a ground assembly and without the need to change a grid connectivity such that certain locations can benefit from future upgrades from pure AC charging or pure DC charging to a combination of DC, AC and Wireless.

The above described features and advantages, as well as others, will become more readily apparent to those of ordinary skill in the art by reference to the following detailed description and accompanying drawings. While it would be desirable to provide one or more of these or other advantageous features, the teachings disclosed herein extend to those embodiments which fall within the scope of the appended claims, regardless of whether they accomplish one or more of the above-mentioned advantages.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects.
FIG. 1 illustrates a modular and field upgradeable EVSE charger in which there is a common communications module for EV communication/control connected to X individual charging modules in accordance with an embodiment of the present invention.
FIG. 2 illustrates a modular and field upgradable infrastructure device for electric vehicle (EV) charging in accordance with an embodiment of the present invention.
FIG. 3 illustrates a method for providing a modular and field upgradable infrastructure device for electric vehicle (EV) charging in accordance with an embodiment of the present invention.

### DETAILED DESCRIPTION

Various technologies that pertain to systems and methods that provide a modular and field upgradable infrastructure device such as Electric Vehicle Supply Equipment (EVSE) for electric vehicle (EV) charging are presented. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary non-limiting embodiments.

To facilitate an understanding of embodiments, principles, and features of the present invention, they are explained hereinafter with reference to implementation in illustrative embodiments. In particular, they are described in the context of a modular and field upgradable infrastructure device such as Electric Vehicle Supply Equipment (EVSE) for electric vehicle (EV) charging. Embodiments of the present invention, however, are not limited to use in the described devices or methods.

The components and materials described hereinafter as making up the various embodiments are intended to be illustrative and not restrictive. Many suitable components and materials that would perform the same or a similar function as the materials described herein are intended to be embraced within the scope of embodiments of the present invention.

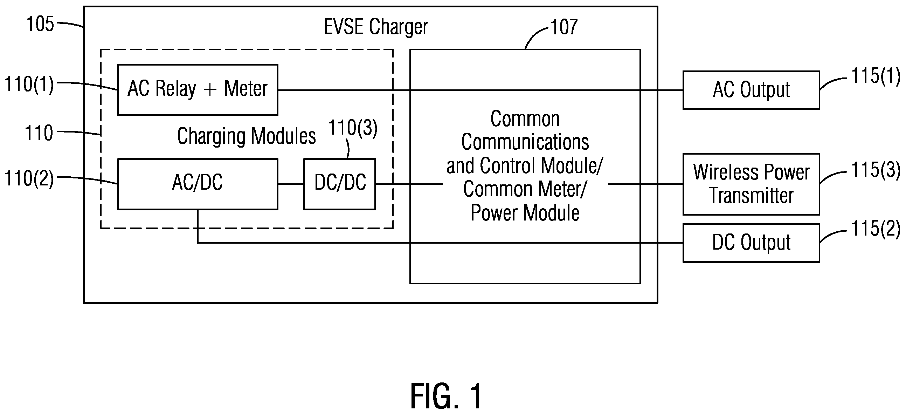

These and other embodiments of the modular and field upgradable infrastructure device such as Electric Vehicle Supply Equipment (EVSE) configured for electric vehicle (EV) charging according to the present disclosure are described below with reference to FIGs. 1-3 herein. Like reference numerals used in the drawings identify similar or identical elements throughout the several views. The drawings are not necessarily drawn to scale.

The term electric vehicle (EV), as used herein, refers to a motorized vehicle deriving locomotive power, either full-time or part-time, from an electric system on board the motorized vehicle. By way of non-limiting examples, an EV may be an electrically powered passenger vehicle for road use; an electric scooter; an electric fork lift; a cargo-carrying vehicle powered, full-time or part-time, by electricity; an off-road electrically powered vehicle; an electrically powered watercraft; etc.

The term electric vehicle supply equipment (EVSE), as used herein, refers to equipment by which an EV may be charged or recharged. An EVSE may comprise or be coupled to a computing system whereby service to the EV is provisioned, optionally, according to parameters. In some embodiments, values for the parameters are operator-selectable. Alternatively, or in addition, the values for the parameters may be automatically selected. An EVSE may comprise a means of providing cost accounting, and may further comprise a payment acceptance component. An EVSE may be installed at a home or residence of an owner/operator of an EV, at a place of business for an owner/operator of an EV, at a fleet facility for a fleet comprising one or more EVs, at a public charging station, etc. The present disclosure uses the terms EVSE and "charging station," where for purposes of this disclosure, an EVSE is an example of a charging station.

An EVSE may be portable such that it can be brought by a user to various locations and used to charge an EV. For example, a user may install and use an EVSE at home to charge an EV. The user may then travel to a friend or family member's home, bringing the EVSE, and install and use the EVSE to charge the EV at the friend or family member's home.

The EVSE can be installed by connecting a plug of the EVSE to an electrical outlet at the installation location. The EVSE may then be used to deliver electricity to an EV for charging. However, electrical conditions may vary based on the installation location, which may impact EVSE performance, and the EVSE may need to be configured at different installation locations. Configuring the EVSE may be time and/or labor intensive, but improper configuring can be detrimental. For example, a maximum current delivered by the EVSE may vary based on the electrical conditions where the EVSE is installed, so the EVSE may need to be configured to determine a correct maximum current. Otherwise, use of the EVSE having an improper configuration may cause an electrical fault, tripping a circuit breaker of the installation location and disrupting charging. Accordingly, embodiments of the present disclosure relate to techniques for determining an EVSE configuration at each location where an EVSE is installed.

Consistent with one embodiment of the present invention, FIG. 1 represents a modular and field upgradeable EVSE charger 105 in which there is a common communications module/ a common meter/power module 107 for EV communication/control connected to X individual charging modules 110 in accordance with an embodiment of the present invention. An AC charging module 110(1) as internal or external pluggable device has a simple safety controller and the relay and adjacent circuits, including metering. A DC charging module 110(2) as internal or external pluggable device has an AC-DC controlled by a DSP with metering at both the AC and DC sides. A wireless charging module 110(3) as internal or external pluggable device includes a DC charging module. For example, internal common but upgradeable power modules (by service technician) and external configurable and upgradeable (by a customer) power modules. AC charging modules are connected to AC cables, DC charging modules to either one or two DC cables, and wireless charging modules are connected to a ground assembly. When multiple DC modules are in place, a matrix allows sharing power between DC blocks. For example, the common meter/power module 107 may be a common power metering or processing module or a common meter/power preconditioning module.

The difference between AC charging and DC charging is the location where the AC power gets converted; inside or outside the car. Unlike AC chargers, a DC charger has the converter inside the charger itself. That means it can feed power directly to the car's battery and doesn't need the onboard charger to convert it. All home EV chargers and the majority of public charging stations use AC, while DC is used for fast charging. The main difference between AC and DC charging (and the time it takes to do so) is where the conversion from AC to DC happens, i.e. in the vehicle or the charging station.

In wireless charging there are a transmitter and a receiver, 220V 50Hz AC supply is converted into high frequency alternating current and this high frequency AC is supplied to the transmitter coil, then it creates alternating magnetic field that cuts the receiver coil and causes the production of AC power output in the receiver. The 220V 50Hz AC may be precise (set by the standard), or it may be a region dependent, being possibly 208V, 220V, 230V or 240V (or even lower values) and either 50Hz or 60Hz, to match the local grid characteristics. It could be 3-phase AC (380V, 400V or 480V). Electrical pressure is generated by overlapping with the secondary coil in the Vehicle Receiver Unit in the vehicle, and electricity is supplied from the first coil to the second one (electromagnetic induction). The unique wireless charging technology achieves a charging efficiency of 80-90%, equivalent to that of cable charging. Types of EV wireless charging technology include: static wireless charging and dynamic wireless charging.

The Open Charge Point Protocol (OCPP) is an application protocol for communication between Electric vehicle (EV) charging stations and a central management system, also known as a charging station network, similar to cell phones and cell phone networks. ISO 15118 is an international standard that defines a communication protocol between EVs and charge stations. The protocol enables plug & charge capability, wherein authorization to start charging is triggered simply by connecting a vehicle to a charger.

The AC charging module 110(1) has an AC output 115(1). The DC charging module 110(2) has a DC output 115(2). The wireless charging module 110(3) has a wireless power transmitter output 115(3). All outputs include power (AC, DC or wireless) and communications.

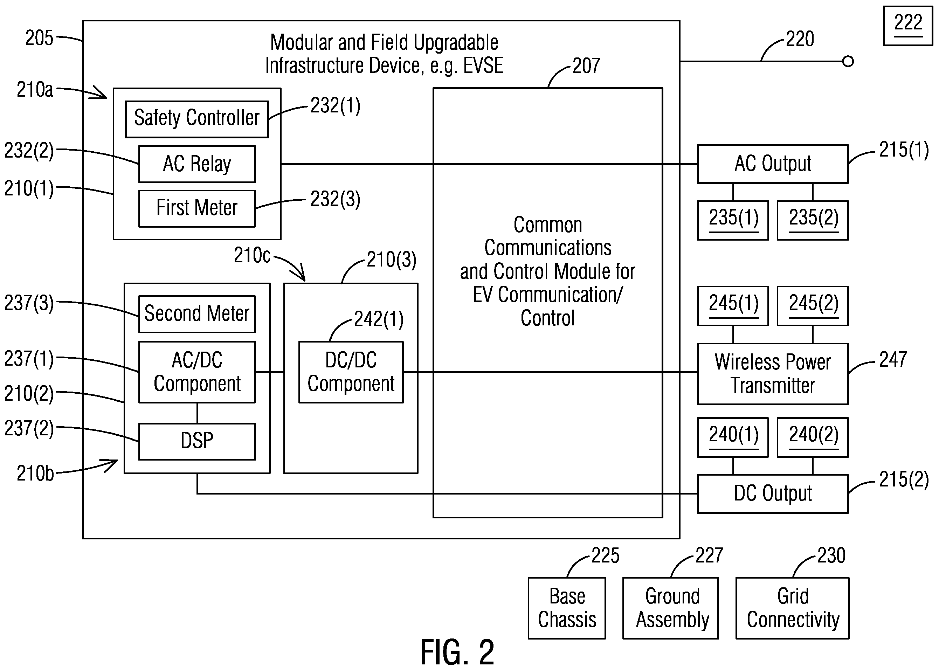

Referring to FIG. 2, it illustrates a modular and field upgradable infrastructure device 205 for electric vehicle (EV) charging in accordance with an embodiment of the present invention. According to one embodiment, the infrastructure device 205 is an Electric Vehicle Supply Equipment (EVSE). The infrastructure device 205 comprises a common communications and control module 207 that can be connected to individual charging modules. The infrastructure device 205 further comprises one or more AC charging modules 210a. The infrastructure device 205 further comprises one or more DC charging modules 210b. The infrastructure device 205 further comprises one or more wireless charging modules 210c.

The common communications and control module 207 is coupled to the one or more AC charging modules 210a, the one or more DC charging modules 210b and the one or more wireless charging modules 210c such that the infrastructure device 205 communicates with an EV using power line 220 communications via a protocol 222 or several protocols. The one or more AC charging modules 210a, the one or more DC charging modules 210b and the one or more wireless charging modules 210c that can be added or replaced or that can be upgraded by a customer in a field without the need to replace a base chassis 225, a ground assembly 227 and without the need to change a grid connectivity 230 such that certain locations can benefit from future upgrades from pure AC charging or pure DC charging to a combination of DC, AC and Wireless.

In one embodiment, an AC charging module 210(1) of the one or more AC charging modules 210a comprises a safety controller 232(1), an AC relay 232(2) and a first meter 232(3). The AC charging module 210(1) provides an AC output 215(1) including a power 235(1) and communications 235(2).

In one embodiment, a DC charging module 210(2) of the one or more DC charging modules 210b comprises an AC/DC component 237(1) controlled by a digital signal processor (DSP) 237(2) and a second meter 237(3). The DC charging module 210(2) provides a DC output 215(2) including a power 240(1) and communications 240(2).

In one embodiment, a wireless charging module 210(3) of the one or more wireless charging modules 210c comprises a DC/DC component 242(1). The wireless charging module 210(3) provides a power 245(1) and communications 245(2) from a wireless power transmitter 247.

The one or more AC charging modules 210a are connected to AC cables, the one or more DC charging modules 210b are connected to either one or two DC cables, and the one or more wireless charging modules 210c are connected to the ground assembly 227. When multiple DC modules of the one or more DC charging modules 210b are in place, a matrix allows sharing power between DC blocks.

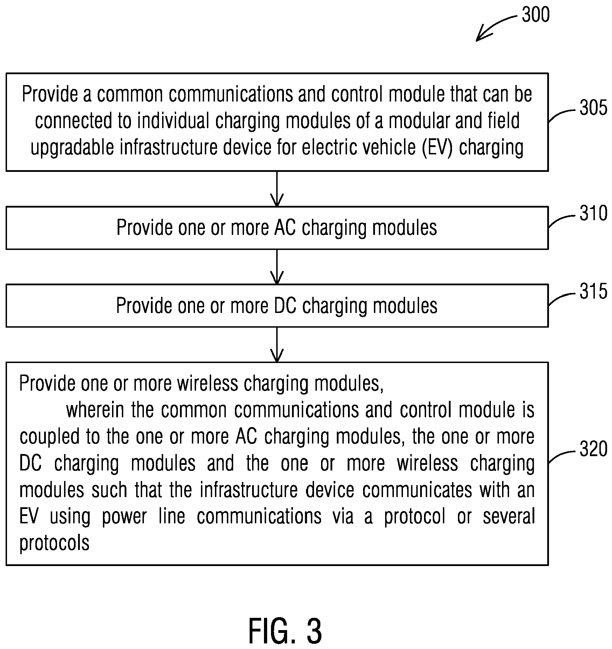

Turning now to FIG. 3, it illustrates a method 300 for providing the modular and field upgradable infrastructure device 205 for electric vehicle (EV) charging in accordance with an embodiment of the present invention. Reference is made to the elements and features described in FIGs. 1-2. It should be appreciated that some steps are not required to be performed in any particular order, and that some steps are optional.

The method 300 comprises a step 305 of providing a common communications and control module that can be connected to individual charging modules. The method 300 further comprises a step 310 of providing one or more AC charging modules. The method 300 further comprises a step 315 of providing one or more DC charging modules. The method 300 further comprises a step 320 of providing one or more wireless charging modules.

The common communications and control module is coupled to the one or more AC charging modules, the one or more DC charging modules and the one or more wireless charging modules such that the infrastructure device communicates with an EV using power line communications via a protocol or several protocols. The one or more AC charging modules, the one or more DC charging modules and the one or more wireless charging modules that can be added or replaced or that can be upgraded by a customer in a field without the need to replace a base chassis, a ground assembly and without the need to change a grid connectivity such that certain locations can benefit from future upgrades from pure AC charging or pure DC charging to a combination of DC, AC and Wireless.

While a design based on an ability to upgrading an EV charger by replacing equipment in the field based on AC, DC, Wireless charging modules is described here a range of one or more other charging modules are also contemplated by the present invention. For example, other charging modules may be implemented based on one or more features presented above without deviating from the spirit of the present invention.

The techniques described herein can be particularly useful for a common communications and control module. While particular embodiments are described in terms of a common communications and control module, the techniques described herein are not limited to such communications and control module but can also be used with other types of modules.

While embodiments of the present invention have been disclosed in exemplary forms, it will be apparent to those skilled in the art that many modifications, additions, and deletions can be made therein without departing from the spirit and scope of the invention and its equivalents, as set forth in the following claims.

Embodiments and the various features and advantageous details thereof are explained more fully with reference to the non-limiting embodiments that are illustrated in the accompanying drawings and detailed in the following description. Descriptions of well-known starting materials, processing techniques, components and equipment are omitted so as not to unnecessarily obscure embodiments in detail. It should be understood, however, that the detailed description and the specific examples, while indicating preferred embodiments, are given by way of illustration only and not by way of limitation. Various substitutions, modifications, additions and/or rearrangements within the spirit and/or scope of the underlying inventive concept will become apparent to those skilled in the art from this disclosure.

As used herein, the terms "comprises," "comprising," "includes," "including," "has," "having" or any other variation thereof, are intended to cover a non-exclusive inclusion. For example, a process, article, or apparatus that comprises a list of elements is not necessarily limited to only those elements but may include other elements not expressly listed or inherent to such process, article, or apparatus.

Additionally, any examples or illustrations given herein are not to be regarded in any way as restrictions on, limits to, or express definitions of, any term or terms with which they are utilized. Instead, these examples or illustrations are to be regarded as being described with respect to one particular embodiment and as illustrative only. Those of ordinary skill in the art will appreciate that any term or terms with which these examples or illustrations are utilized will encompass other embodiments which may or may not be given therewith or elsewhere in the specification and all such embodiments are intended to be included within the scope of that term or terms.

In the foregoing specification, the invention has been described with reference to specific embodiments. However, one of ordinary skill in the art appreciates that various modifications and changes can be made without departing from the scope of the invention. Accordingly, the specification and figures are to be regarded in an illustrative rather than a restrictive sense, and all such modifications are intended to be included within the scope of invention.

Although the invention has been described with respect to specific embodiments thereof, these embodiments are merely illustrative, and not restrictive of the invention. The description herein of illustrated embodiments of the invention is not intended to be exhaustive or to limit the invention to the precise forms disclosed herein (and in particular, the inclusion of any particular embodiment, feature or function is not intended to limit the scope of the invention to such embodiment, feature or function). Rather, the description is intended to describe illustrative embodiments, features and functions in order to provide a person of ordinary skill in the art context to understand the invention without limiting the invention to any particularly described embodiment, feature or function. While specific embodiments of, and examples for, the invention are described herein for illustrative purposes only, various equivalent modifications are possible within the spirit and scope of the invention, as those skilled in the relevant art will recognize and appreciate. As indicated, these modifications may be made to the invention in light of the foregoing description of illustrated embodiments of the invention and are to be included within the spirit and scope of the invention. Thus, while the invention has been described herein with reference to particular embodiments thereof, a latitude of modification, various changes and substitutions are intended in the foregoing disclosures, and it will be appreciated that in some instances some features of embodiments of the invention will be employed without a corresponding use of other features without departing from the scope and spirit of the invention as set forth. Therefore, many modifications may be made to adapt a particular situation or material to the essential scope and spirit of the invention.

Respective appearances of the phrases "in one embodiment," "in an embodiment," or "in a specific embodiment" or similar terminology in various places throughout this specification are not necessarily referring to the same embodiment. Furthermore, the particular features, structures, or characteristics of any particular embodiment may be combined in any suitable manner with one or more other embodiments. It is to be understood that other variations and modifications of the embodiments described and illustrated herein are possible in light of the teachings herein and are to be considered as part of the spirit and scope of the invention.

In the description herein, numerous specific details are provided, such as examples of components and/or methods, to provide a thorough understanding of embodiments of the invention. One skilled in the relevant art will recognize, however, that an embodiment may be able to be practiced without one or more of the specific details, or with other apparatus, systems, assemblies, methods, components, materials, parts, and/or the like. In other instances, well-known structures, components, systems, materials, or operations are not specifically shown or described in detail to avoid obscuring aspects of embodiments of the invention. While the invention may be illustrated by using a particular embodiment, this is not and does not limit the invention to any particular embodiment and a person of ordinary skill in the art will recognize that additional embodiments are readily understandable and are a part of this invention.

It will also be appreciated that one or more of the elements depicted in the drawings/figures can also be implemented in a more separated or integrated manner, or even removed or rendered as inoperable in certain cases, as is useful in accordance with a particular application.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component.

Further Embodiments:
1. A modular and field upgradable infrastructure device for electric vehicle (EV) charging, the infrastructure device comprising:
   a common communications and control module that can be connected to individual charging modules;
   one or more AC charging modules as internal or external pluggable devices;
   one or more DC charging modules as internal or external pluggable devices; and
   one or more wireless charging modules as internal or external pluggable devices,
   wherein the common communications and control module is individually coupled to the one or more AC charging modules, the one or more DC charging modules and the one or more wireless charging modules such that the infrastructure device communicates with an EV using power line communications via a protocol or several protocols.
2. The modular and field upgradable infrastructure device of embodiment 1, wherein an AC charging module of the one or more AC charging modules comprises a safety controller, an AC relay and a first meter, wherein the AC charging module provides an AC output including a power and communications.
3. The modular and field upgradable infrastructure device of embodiment 1, wherein the one or more AC charging modules, the one or more DC charging modules and the one or more wireless charging modules can be added or replaced or can be upgraded by a customer in a field without the need to replace a base chassis, a ground assembly and without the need to change a grid connectivity such that certain locations can benefit from future upgrades from pure AC charging or pure DC charging to a combination of DC, AC and Wireless.
4. The modular and field upgradable infrastructure device of embodiment 1, wherein a DC charging module of the one or more DC charging modules comprises an AC/DC component controlled by a digital signal processor (DSP) and a second meter.
5. The modular and field upgradable infrastructure device of embodiment 4, wherein the DC charging module provides a DC output including a power and communications.
6. The modular and field upgradable infrastructure device of embodiment 1, wherein a wireless charging module of the one or more wireless charging modules comprises a DC/DC component.
7. The modular and field upgradable infrastructure device of embodiment 6, wherein the wireless charging module provides a power and communications from a wireless power transmitter.
8. The modular and field upgradable infrastructure device of embodiment 1, wherein the one or more AC charging modules are connected to AC cables, the one or more DC charging modules are connected to either one or two DC cables, and the one or more wireless charging modules are connected to the ground assembly.
9. The modular and field upgradable infrastructure device of embodiment 1, wherein multiple DC modules of the one or more DC charging modules are in place, a matrix allows sharing power between DC blocks.
10. The modular and field upgradable infrastructure device of embodiment 1, wherein the modular and field upgradable infrastructure device is an Electric Vehicle Supply Equipment (EVSE).
11. A method of providing a modular and field upgradable infrastructure device for electric vehicle (EV) charging, the method comprising:
   providing a common communications and control module that can be connected to individual charging modules;
   providing one or more AC charging modules as internal or external pluggable devices;
   providing one or more DC charging modules as internal or external pluggable devices; and
   providing one or more wireless charging modules as internal or external pluggable devices,
   wherein the common communications and control module is coupled to the one or more AC charging modules, the one or more DC charging modules and the one or more wireless charging modules such that the infrastructure device communicates with an EV using power line communications via a protocol or several protocols.
12. The method of embodiment 11, wherein an AC charging module of the one or more AC charging modules comprises a safety controller, an AC relay and a first meter, wherein the AC charging module provides an AC output including a power and communications.
13. The method of embodiment 11, wherein the one or more AC charging modules, the one or more DC charging modules and the one or more wireless charging modules can be added or replaced or can be upgraded by a customer in a field without the need to replace a base chassis, a ground assembly and without the need to change a grid connectivity such that certain locations can benefit from future upgrades from pure AC charging or pure DC charging to a combination of DC, AC and Wireless.
14. The method of embodiment 11, wherein a DC charging module of the one or more DC charging modules comprises an AC/DC component controlled by a digital signal processor (DSP) and a second meter, wherein the DC charging module provides a DC output including a power and communications.
15. The method of embodiment 11, wherein a wireless charging module of the one or more wireless charging modules comprises a DC/DC component, wherein the wireless charging module provides a power and communications from a wireless power transmitter.
16. The method of embodiment 11, wherein the one or more AC charging modules are connected to AC cables, the one or more DC charging modules are connected to either one or two DC cables, and the one or more wireless charging modules are connected to the ground assembly.
17. The method of embodiment 11, wherein multiple DC modules of the one or more DC charging modules are in place, a matrix allows sharing power between DC blocks.
18. The method of embodiment 11, wherein the modular and field upgradable infrastructure device is an Electric Vehicle Supply Equipment (EVSE).
19. A modular and field upgradable infrastructure device for electric vehicle (EV) charging, the infrastructure device comprising:
   a common meter/power module that can be connected to individual charging modules;
   one or more AC charging modules as internal or external pluggable devices;
   one or more DC charging modules as internal or external pluggable devices; and
   one or more wireless charging modules as internal or external pluggable devices,
   wherein the common meter/power module is individually coupled to the one or more AC charging modules, the one or more DC charging modules and the one or more wireless charging modules such that the infrastructure device communicates with an EV using power line communications via a protocol or several protocols.
20. The modular and field upgradable infrastructure device of embodiment 19, wherein an AC charging module of the one or more AC charging modules comprises a safety controller, an AC relay and a first meter, wherein a DC charging module of the one or more DC charging modules comprises an AC/DC component controlled by a digital signal processor (DSP) and a second meter, and wherein a wireless charging module of the one or more wireless charging modules comprises a DC/DC component

## Claims

1. A modular and field upgradable infrastructure device for electric vehicle (EV) charging, the infrastructure device comprising:
a common communications and control module that can be connected to individual charging modules;
one or more AC charging modules as internal or external pluggable devices;
one or more DC charging modules as internal or external pluggable devices; and
one or more wireless charging modules as internal or external pluggable devices,
wherein the common communications and control module is individually coupled to the one or more AC charging modules, the one or more DC charging modules and the one or more wireless charging modules such that the infrastructure device communicates with an EV using power line communications via a protocol or several protocols.

2. The infrastructure device of claim 1, wherein an AC charging module of the one or more AC charging modules comprises a safety controller, an AC relay and a first meter, wherein the AC charging module provides an AC output including a power and communications.

3. The infrastructure device according to any of the preceding claims, wherein the one or more AC charging modules, the one or more DC charging modules and the one or more wireless charging modules can be added or replaced or can be upgraded by a customer in a field without the need to replace a base chassis, a ground assembly and without the need to change a grid connectivity such that certain locations can benefit from future upgrades from pure AC charging or pure DC charging to a combination of DC, AC and Wireless.

4. The infrastructure device according to any of the preceding claims, wherein a DC charging module of the one or more DC charging modules comprises an AC/DC component controlled by a digital signal processor (DSP) and a second meter.

5. The infrastructure device of claim 4, wherein the DC charging module provides a DC output including a power and communications.

6. The infrastructure device according to any of the preceding claims, wherein a wireless charging module of the one or more wireless charging modules comprises a DC/DC component.

7. The infrastructure device of claim 6, wherein the wireless charging module provides a power and communications from a wireless power transmitter.

8. The infrastructure device according to any of the preceding claims, wherein the one or more AC charging modules are connected to AC cables, the one or more DC charging modules are connected to either one or two DC cables, and the one or more wireless charging modules are connected to the ground assembly.

9. The infrastructure device according to any of the preceding claims, wherein multiple DC modules of the one or more DC charging modules are in place, a matrix allows sharing power between DC blocks.

10. The infrastructure device according to any of the preceding claims, wherein the modular and field upgradable infrastructure device is an Electric Vehicle Supply Equipment (EVSE).

11. A method of providing a modular and field upgradable infrastructure device for electric vehicle (EV) charging, in particular an infrastructure device according to any of the claims 1 to 10, the method comprising:
providing a common communications and control module that can be connected to individual charging modules;
providing one or more AC charging modules as internal or external pluggable devices;
providing one or more DC charging modules as internal or external pluggable devices; and
providing one or more wireless charging modules as internal or external pluggable devices,
wherein the common communications and control module is coupled to the one or more AC charging modules, the one or more DC charging modules and the one or more wireless charging modules such that the infrastructure device communicates with an EV using power line communications via a protocol or several protocols.

12. The method of claim 11, wherein an AC charging module of the one or more AC charging modules comprises a safety controller, an AC relay and a first meter, wherein the AC charging module provides an AC output including a power and communications.

13. The method of claim 11 or 12, wherein the one or more AC charging modules, the one or more DC charging modules and the one or more wireless charging modules can be added or replaced or can be upgraded by a customer in a field without the need to replace a base chassis, a ground assembly and without the need to change a grid connectivity such that certain locations can benefit from future upgrades from pure AC charging or pure DC charging to a combination of DC, AC and Wireless, wherein a DC charging module of the one or more DC charging modules comprises an AC/DC component controlled by a digital signal processor (DSP) and a second meter, wherein the DC charging module provides a DC output including a power and communications, and wherein a wireless charging module of the one or more wireless charging modules comprises a DC/DC component, wherein the wireless charging module provides a power and communications from a wireless power transmitter.

14. A modular and field upgradable infrastructure device for electric vehicle (EV) charging, the infrastructure device comprising:
a common meter/power module that can be connected to individual charging modules;
one or more AC charging modules as internal or external pluggable devices;
one or more DC charging modules as internal or external pluggable devices; and
one or more wireless charging modules as internal or external pluggable devices,
wherein the common meter/power module is individually coupled to the one or more AC charging modules, the one or more DC charging modules and the one or more wireless charging modules such that the infrastructure device communicates with an EV using power line communications via a protocol or several protocols.

15. The modular and field upgradable infrastructure device of claim 14, wherein an AC charging module of the one or more AC charging modules comprises a safety controller, an AC relay and a first meter, wherein a DC charging module of the one or more DC charging modules comprises an AC/DC component controlled by a digital signal processor (DSP) and a second meter, and wherein a wireless charging module of the one or more wireless charging modules comprises a DC/DC component.
